# EUROPEAN PATENT APPLICATION

(11) **EP 1 796 334 A1**
(43) Date of publication of application: **13.06.2007**
(21) Application number: 06256178.2
(22) Date of filing: 04.12.2006
(51) Int. Cl.: H04L 12/56

(54) **Dynamic service blade and method**

(30) Priority: 07.12.2005 US 748348 P
(71) Applicant: Ericsson AB, 164 80 Stockholm (SE)
(72) Inventor: Mullahy, Brian, Leominster, Massachusetts 01453 (US); Barbas, Steve, Billerica, Massachusetts 01862 (US); Luciani, James, Acton, Massachusetts 01720 (US)
(74) Representative: Rees, Simon John Lewis

(57) **Abstract**

A dynamic services blade which is embedded in a data path includes a router. The blade includes a general computer platform combined with the router to host the services. The blade includes a container in which the router and the computer are disposed. A method for hosting services. The method includes the steps of applying network functions to control plane traffic with a dynamic services blade which is embedded in a data path. There is the step of applying network functions to data plane traffic with the dynamic services blade.

## Description

### FIELD OF THE INVENTION

The present invention is related to a dynamic services blade embedded in a data path having a container with a computer platform and a router. More specifically, the present invention is related to a dynamic services blade embedded in a data path having a container with a computer platform and a router that applies network functions to control plane traffic and data plane traffic.

### BACKGROUND OF THE INVENTION

Service providers, in an attempt to reduce overall capital and operating expenditures, are requiring more integrated services in edge routing equipment. Integrating services into a single platform allows providers to reduce the number of platforms required to provide a service which in turn enables a reduction in footprint area, electrical and cooling costs, and maintenance costs.

Service requirements are specific to providers and are typically addressed during the RFI, RFQ and customer trial stages. To be competitive in the bidding process requires that equipment manufacturers provide services in a timeframe that is aligned with a customer purchasing cycle. Typically the choice of solutions is less than optimal and involves either an using an OEM solution, which reduces profit margins and doesn't directly meet customer requirements, or developing a custom solution specific to edge router product itself.

Developing a custom solution can, depending on the type of service, be costly in terms of development time and expenses. Significant resources may need to be applied to the design, integration and testing of the service. Depending on the scope of the overall development effort, a fully implemented solution may fall outside a customer's purchasing window or significantly increase the risk of delivering a solution within the window.

### BRIEF SUMMARY OF THE INVENTION

The 1^{st} overall goal of the dynamic service blade architecture is provide a high quality service implementation in as short as time as possible assuming that a new service is to be deployed. To meet this goal, the architecture is based on a model that employs as its primary vehicle third party software. A software implementation eliminates longer hardware design cycles and a 3^{rd} party implementation offers the quality and interoperability advantages of previously tested/certified design. Expertise in a specific service is also obtained without have to ramp up an engineering team. Using multiple 3^{rd} party software applications, the number of services offered on the platform can scale at a much faster pace than if developed with limited in house resources.

The 2^{nd} goal of the dynamic service blade architecture is to enable the services to be integrated into the platform in a cost effective and scalable manner. The primary mechanism used to meet this goal is a multi-processing engine blade designed to integrate into the dynamic service blade chassis in a manner that complements the existing dynamic service blade hardware and software components. The card uses high performance general purpose processing, custom dynamic service blade hardware and embedded software to create a platform onto which software applications can be ported. In addition to using a model that supports multiple services on a single processing engine card, the architecture also supports a model where by the same service or multiple services can be supported on more than one processing engine blade in the system.

The 3^{rd} goal of the architecture is to provide an implementation that from a cost perspective burdens only the service providers that require the added service functionality in the equipment they purchase. Stated differently, the base cost of a dynamic service blade configured without any of the components of the service architecture should not increase from the cost point that existed before the architecture was implemented.

The present invention pertains to a dynamic services blade which is embedded in a data path. The blade comprises a router. The blade comprises a general computer platform combined with the router to host the services. The blade comprises a container in which the router and the computer are disposed.

The present invention pertains to a method for hosting services. The method comprises the steps of applying network functions to control plane traffic with a dynamic services blade which is embedded in a data path. There is the step of applying network functions to data plane traffic with the dynamic services blade.

### BRIEF DESCRIPTION OF THE SEVERAL VIEWS OF THE DRAWING

In the accompanying drawings, the preferred embodiment of the invention and preferred methods of practicing the invention are illustrated in which:
Figure 1 is a block diagram of the dynamic service blade.
Figure 2 is a block diagram of the dynamic service blade.
Figure 3 shows the data flow - inline service of the dynamic service blade.
Figure 4 shows the data flow - mirrored service of the dynamic service blade.
Figures 5 and 6 show secure access and core services.
Figure 7 shows remote access VPN service.
Figure 8 shows managed access firewall.
Figure 9 shows IPV4/IPV6 gateway.
Figure 10 shows VIOP signaling gateway.
Figure 11 is a block diagram regarding a DSB Linux kernel example.
Figure 12 is a block diagram of a NAT private and public interface configuration.
Figure 13 shows a dynamic services blade.
Figure 14 is a block diagram of a dynamic services blade.

### DETAILED DESCRIPTION OF THE INVENTION

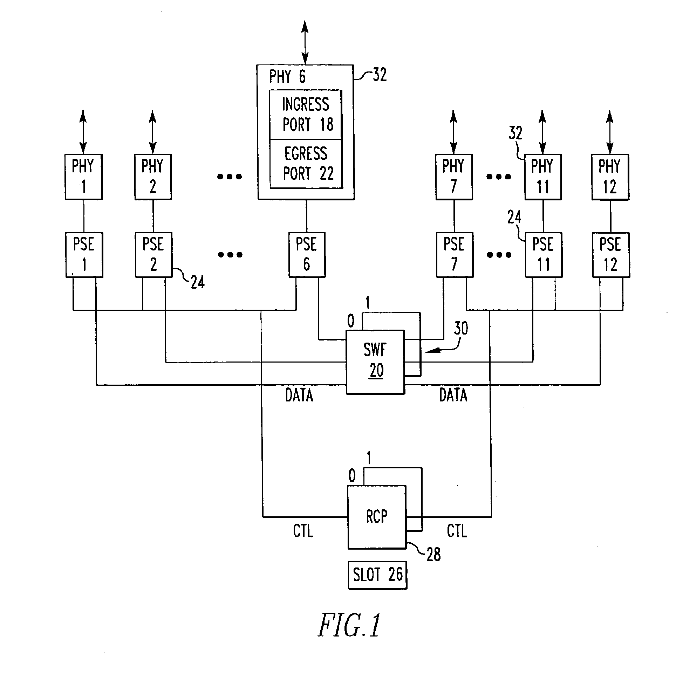

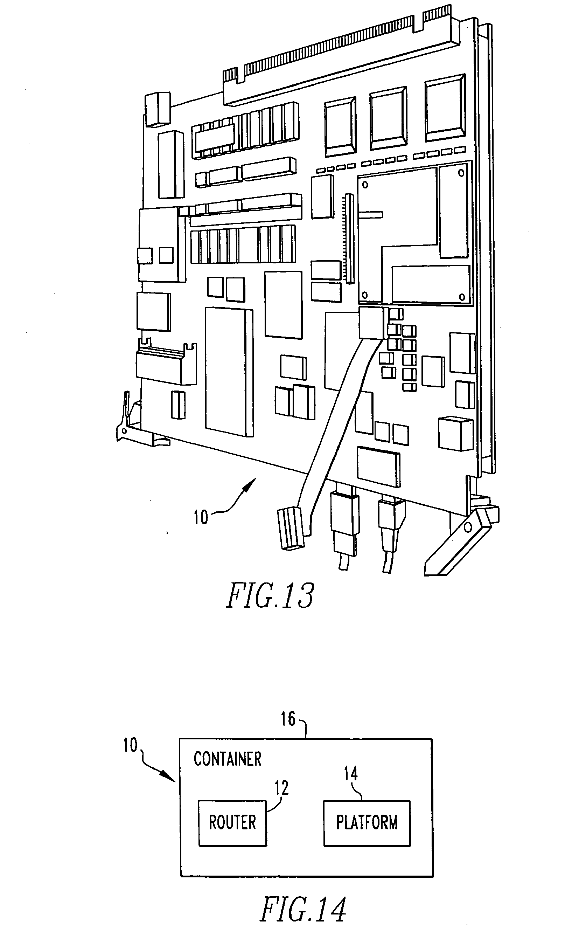

Referring now to the drawings wherein like reference numerals refer to similar or identical parts throughout the several views, and more specifically to figures 1 and 14 thereof, there is shown a dynamic services blade 10 which is embedded in a data path. The blade 10 comprises a router 12. The blade 10 comprises a general computer platform 14 combined with the router 12 to host the services. The blade 10 comprises a container 16 in which the router 12 and the computer are disposed.

Preferably, the router 12 includes switch fabrics 20. The router 12 preferably includes ingress ports 18 in communication with the switch fabrics 20 and egress ports 22 in communication with the switch fabrics 20 for packet transfer with external networks. Preferably, the platform 14 is configured to execute third-party software.

The container 16 preferably has a plurality of slots 26, the router 12 includes a plurality of route control processor cards 28 that fit into the slots 26, and switch fabric cards 30 that fit into the slots 26 which have the switch fabrics 20, and the platform 14 includes service engine cards 24. Preferably, the service engine cards 24 are configured to provide a distributed architecture. The rate control processor cards are preferably configured to execute routing and container 16 management.

Preferably, the service engine cards 24 include redundant switch fabric cards 30 configured to support automatic failover. The service engine cards 24 are preferably configured to provide classification, forwarding, queuing and buffering operations to switch packets from ingress ports 18 to egress ports 22. Preferably, the ingress ports 18 and egress ports 22 are found on interface cards 32 disposed in the slots 26.

The platform 14 is preferably configured to provide a bump in the wire topology that allows packets to pass through with a data transform or filter function. Preferably, the platform 14 is configured as a gateway translator. The platform 14 is preferably configured as the termination point for the packets.

The present invention pertains to a method for hosting services. The method comprises the steps of applying network functions to control plane traffic with a dynamic services blade 10 which is embedded in a data path. There is the step of applying network functions to data plane traffic with the dynamic services blade 10.

Preferably, there is the step of supporting embedded intercept and media over IP applications as part of a router 12 of the dynamic services blade 10.

The Dynamic Services Blade 10 provides a vehicle for those service providers that need or desire to differentiate their service offerings through the addition of customized applications. The blade 10 provides a standards-based engine to host a variety of applications. This enables a carrier customer to customize their IP infrastructure all under a single management interface. This is the first time that a router 12 has been combined with a general computer platform 14 to host services which would normally reside on many boxes along with associated, power, space, operational costs, etc. The DSB 10 is a vehicle for rapid service delivery of one or more services without requiring truck rolls, etc. The DSB 10 is literally imbedded in the datapath so not only can it apply new networks functions to control plane traffic it can do so with dataplane traffic. The unique features will be first in the industry to support imbedded lawful intercept and media over IP applications as part of the router 12 itself rather than a myriad of boxes strapped together in the carrier data center.

In the operation of the preferred embodiment, the primary implementation vehicle is a multi-processor based engine blade 10 called the Dynamic Services Blade (DSB) 10. The card resides in a front side PSE card 24 slot 26 and interfaces directly to a port of the central switch fabric. Through modifications to a PSE's forwarding table, a packet stream can be diverted into the DSB 10 for inline service processing while traversing from an PSE port to an egress PSE port.

Redirecting a packet flow to the DSB 10 allows for support of different service options. A "bump in the wire" type topology can be emulated for services that only require a pass through with a data transform or filter function. Proxy services such as gateway translators can be also emulated in a similar manner with the DSB 10 provide services that are higher up in the protocol stack. A third option can implement a termination point directly on the DSB 10. This could be at a lower level in the protocol stack as is the case with IPSEC tunnel termination, or a higher level in the stack as is the case with signaling software.

The dynamic service blade 10 implementation strategy employs a centralized architecture whereby packet flows from different PSE cards 24 can be forwarded to the DSB 10. As the number of packet flows requiring DSB 10 servicing increase to the maximum throughput of the card, additional DSBs 10 can be added to support the additional load. Likewise as the number of services implemented on a specific DSB 10 increases to the point where the card become processing or memory limited, additional cards can be added to handle the load. The primary goal of the centralized architecture is to allow 3^{rd} party software applications to rapidly ported into the system.

The dynamic service blade 10 implementation strategy also employs a distributed architecture whereby packet flows are directly serviced on the PSE cards 24 themselves. This architecture works in a complementary fashion to the centralized DSB 10 architecture and uses many of the same components. Based on service provider network topologies, the distributed architecture can enable higher performance services at lower cost points. The distributed architecture can support each of the service options described above but will typically only be able to provide a single service per PSE card.

The following sections briefly describe the basic components that comprise the dynamic service blade 10 architecture.

The DSB 10 as described above is used as a platform 14 to enable 3^{rd} party software applications to execute via a centralized architecture. The two general function areas performed by the card are network application services and packet forwarding. DSB 10 hardware is implemented to allocate queuing and buffering resources consistent with customer service contracts. Embedded software on DSB 10 is designed to 1) ensure packet flows services are configured in accordance with customer contracts, 2) support the operation of hardware on the card and 3) enable rapid porting of 3^{rd} part software applications on to the DSB 10.

Service cards are primarily used to implement distributed service architectures within the dynamic service blade 10. They are daughter cards that reside on PSE cards 24 and provide a specific service implemented in hardware, software or both. Typically only a single service is implemented on a service card although multiple variants of services cards will exist. All three types of service options described above are supported on service cards: bump in the wire, proxy and termination services. The software implemented on a service card is specifically tuned to the card for performance reasons. Depending on the mode of service card, as described below, the software can be at a device driver level supporting hardware components, or at an embedded level supporting a processor.

The Dynamic Hardware Services Blade, DHS, is used as DSB 10 offload engine. It provides a hardware assist to the DSB 10 and supports a centralized service architecture. The DHS resides in the dynamic service blade 10 in the rear side physical interface slot 26 associated with a front side DSB 10. Packet flows directed to the DSB 10 are classified as processor directed flows or DHS directed flows. Once directed to the DHS, flows can be serviced without requiring processing by the DSB 10 processor complex. The DHS contains hardware specific service engines along with an onboard NPU based forwarding engine. Software supporting the DHS is typically not 3^{rd} party software and is leveraged from other components in the dynamic service blade 10.

### DSB 10 Overview

The dynamic service blade 10 is a carrier class 60 Gb/s routing platform 14. It is a 16 slot midplane based design supporting front side redundant route control processor cards 28, redundant switch fabric cards 30 and up to 12 packet service engine cards 24. Associated with each packet service engine card is a rear side physical interface card 32 that provides the interface to an external network. Figure 1 contains a high level block diagram of the dynamic service blade 10 system.

### Route Control Processor

The dynamic service blade 10 supports redundant Route Control Processor (RCPv2) cards that execute the routing and chassis management processes for the system. The RCPv2 compute engine is a Motorola MPC7457 PPC processor operating at 1 Ghz with system memory sizes ranging from 1 to 3 GB. An IDE IO subsystem consists of 40 GB of hard disk storage, 128 MB of flash storage and a removable PC card. Two 1 Gb/s links are supported, one link dedicated for RCPv2 to RCPv2 communication and one link dedicated for RCPv2 to Packet Service Engine (PSE) communication.

The dynamic service blade 10 supports redundant Switch Fabric (SWv2) cards that provide an aggregate full duplex throughput of 64 Gb/s between PSE cards 24 in the system. The fabric is based on AMCC's PRS64G memory switch and full duplex links operate between the SWv2 and each of the twelve PSE cards 24 in the system. The SWv2 contains an onboard micro engine that monitors fabric operation and communicates with the redundant switch fabric card 30 to support automatic failover.

The dynamic service blade 10 packet services engine card supports classification, forwarding, queuing and buffering operations required to switch packets from ingress ports 18 to egress ports 22. The classification and forwarding functions are provided via a network processor based designed using Vitesse's IQ2200 NP. The PSE supports up to 128K bandwidth provisioned flows and supports a Diffserv QOS model through proprietary WFQ and RED mechanisms. The PSE data plane supports a maximum throughput of 2.5 Gb/s. The PSE control plane compute engine is a MPC7448 PPC operating at 1.2 Ghz with a system memory size of 1 GB. A dynamic service blade 10 system supports up to 12 PSE cards 24 and a common design is used to support all physical interface card 32 types.

The dynamic service blade 10 supports multiple physical interface (PHY) card types. PHY cards 32 provide the interface between external media and the PSE cards 24 and generally are specific to an L1/L2 pair. Interface rates ranging from DS0 up to OC48 are supported. Supported interface types are Gigabit Ethernet, DS3 Channelized, DS3 ATM, OC12 Channelized OC3/OC12/OC48 ATM and OC3/OC12/OC48 POS.

The DSB 10 performs two basic types of functions on classified packet flows: application services and forwarding.

Application software packages perform the value added services that customers purchase. They are implemented in software and are executed by one of 2 processor subsystems on the DSB 10. Application software packages perform lower level network services such IPSEC type services, midlevel services such as protocol gateways, or high level services such as signaling software.

The forwarding function is also performed on packet flows that transit the DSB 10. Packets that are received in a tunneled form are removed from the tunnel before forwarding is performed. For instance, a tunneled IPSec packet is decrypted to obtain the IP header with packet that will be used for classification and forwarding. A trie table and next hop record table are maintained internal to the DSB 10 card. A next hop record, using the same format that an ingress PSE generates, is encapsulated to all packets being transmitted into the switch fabric.

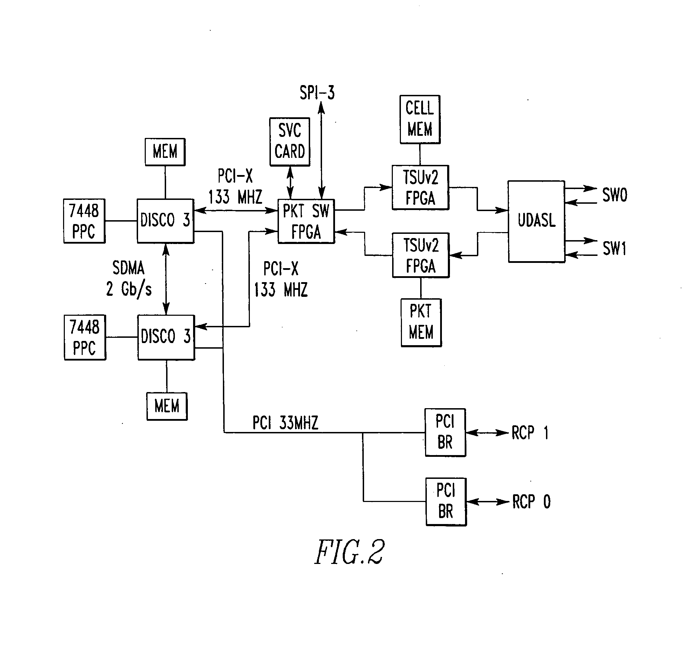

The following sections provide an overview of the hardware that resides on the DSB 10 card. A block diagram of the DSB 10 card is shown in Figure 2.

The DSB's 10 processor subsystems are based on the Freescale MPC7448 PPC processor. The processor is a 1.5 Ghz processor with an internal 1MB L2 cache. It uses a 32 bit super scaler architecture with triple instruction issue and a Altivec coprocessor. The processor supports a 36 bit address space. It is implemented on a 90nm process and packaged in a 360 BGA and has a typical power dissipation of 15 watts.

The MPC7448 interfaces via its 200Mhz system MPX bus to a Marvell Discovery III memory controller device. The Discovery supports 2 GB of main memory via a standard 72 bit DIMM. The Discovery supports a generic device bus that supports up to 256 MB of flash, a board level CSR CPLD and a FPGA configuration CPLD. For memory intensive applications, it is expected that a variant of the board will be offered supporting 4 GB of main memory per processor at a processor bus speed of 20% less than above 200Mhz.

The Discovery III also supports dual PCI busses. A standard 33 Mhz PCI bus interfaces to system bridging and used for transfers between the RCPv2's and the DSB 10. A 32 bit 133Mhz PCI-X bus is used as the high bandwidth interface for packet flow data being DMA'd into and out of system memory.

The PCI-X bus is a point to point bus between the Discovery III and a Packet Switch FPGA on the DSB 10 board.

Two independent processor subsystems are contained on the DSB 10 with each subsystem's Discovery III controller interfacing to a separate PCI-X port on the Packet Switch FPGA. Packets received from a ingress PSE are directed to a specific processor subsystem by the packet switch FPGA and are DMA'd into the processor's main memory. For packets being transmitted to an egress PSE, a Discovery III controller transmits bursts to the Packet Switch FPGA which then builds a packet for transmission to the switch fabric.

A single 10/100/1000 front panel Ethernet connection is supported per processor subsection and can be used for attachment to external development system or to external network attached storage. Additionally, a single front panel serial port is supported per processor subsystem for development purposes.

Inter processor communication is supported via two methods. The first method is used for lower bandwidth messaging and uses standard PCI communication between Discovery III devices in each processor subsystem with address windows being opened each processors memory that can be written by the other processor. The second method supported is used for higher speed block or packet transfers and used the Discovery III's SMDA link. The SDMA link is 1GB/s per direction, full duplex link which uses internal Discovery III DMA engines with descriptor chaining to transfer data between each processor's memory.

The IDE file system provides operating system and application storage. An onboard PCI to IDE controller provides the interface from the DSB' s 10 processor subsections to a dual channel IDE subsystem. The dual channel IDE subsystem is implemented on a removable daughter card and contains support for 2 compact flash memory devices per IDE channel. Two of the IDE compact flash sites support CF+ Type 1 or 2 form factors while the remaining two support CF+ Type 1 only.

Compact flash capacities supported per CF site are 1GB, 2GB, 4GB or 8GB for an aggregate maximum total of 32GB. Compact flash type support are under evaluation and it is likely that in addition to standard CF, a variants supporting secure access as well as non recoverable data erasure will exist.

The packet switching subsection is used to transfer packets from the egress buffering system into a processor system memory over a PCI-X bus. The packet subsystem supports 32 egress channels per processor subsystems with each channel being associated with a TSU virtual output queue. An internal DMA engine monitors queues in processor system memory and transfers packet data into processor main memory queues. A ring based structure is used to determine the memory pages that packet data is written into.

The packet switching subsection is also used to transfer packets from processor memory into a scratchpad reassembly buffer over a PCI-X bus before moving the packet into the ingress buffering system.

The packet switching subsection also has paths to a service card and to DHS card. Both cards are optional. The Packet Switch FPGA uses an internal mapping ram to allocate an egress channel to a service card, a DHS card, or a processor. In the case of a service card or DHS card, requests for packet data originate on the card itself and not within the Packet Switch FPGA.

The ingress data path subsection contains a cut through buffering system, rate policer and a switch arbiter. The buffering system stores/queues packets destined to egress PSE's. The buffering system is VOQ based supporting 32 queues, a high and low priority for each switch fabric port. The associated switch fabric segmenter supports 32 segmentations and the switch arbiter uses a flow controlled protocol with the shared memory switch fabric to provide lossless packet transmission through the fabric card.

The ingress data path subsection supports 128K flows. Each flow has dual token bucket mechanism to support rate policing bandwidths for 64Kb/s up to 2.4 Gb/s. The rate policer can forward, remark or discard packets according to service contract for the flow. Statistics are maintained on per flow basis. A packet's flow assignments are generated by the processor subsystem that serviced the packet or if the DHS is used, by the NP based forwarding engine.

The egress data path subsection contains a queuing and buffering system. The buffering subsystem contains a 256 MB DDR packet memory that is partitioned in to 64B blocks. Packets are store via link lists of 64B memory blocks. The associated switch fabric reassembly function supports 32 reassembly streams and the segmentation function supports 16K segmentations.
The queuing subsystem supports 128K flows with each flow being multiplexed onto 1 of 16K channels. Each channel supports a high priority low latency queue and a lower priority weighted fair queue. In addition to the queuing data structures, a provisioning memory is used to assign bandwidths, threshold limits, ect. Congestion management is implemented via RED on a per flow basis for flows provisioned onto lower priority queues. QOS support is implemented via a Diffserv model with EF, AF1-4 and BE support. Full egress statistics collection is maintained on per flow basis.

The DSB 10 data plane interface to both switch fabric cards 30 is through a Udasl interface converter chip. The Udasl contains the serializer/deserializer circuitry, data deskew circuitry and switchover circuitry to enable communication to both switch fabric cards 30.

The DSB 10 control plane interface to both RCP's is through system PCI bridging. An IPCM channel is setup between the DSB 10 and each of the RCP's to enable full duplex communication.

The following sections provide an overview of the major software components executing on the DSB 10 card. It is not an exhaustive list of the software components executing on the card.

### RTOS

The two processor subsystems on the DSB 10 execute code that provides network services on packet data. In addition, processor subsystem 0 is assigned the task of running the device driver software for all hardware shared by both processors on the card. Access to data structures by processor subsystem 1 or by either RCP card 28 is through messaging to processor subsystem 0.

A Linux OS is used as the RTOS on the DSB 10. Although an initial DSB 10 product with separate memory subsystems and a single processor per subsystem using a VxWorks RTOS would result in a faster porting effort as the code base would be leveraged from the PSEv2 design, Linux offers the best CPU scaling and third party software licensing options required to be successful.

To allow the DSB 10 to effectively scale in processor performance as technology scales requires that an RTOS support an SMP architecture. An SMP architecture eliminates the need to load balance executing applications between multiple processors that share the same memory. It also eliminates the need to statically provision memory between those processors. The result is seamless processor upgrades that allow products to be offered with single, dual or in the future quad processors within a single processor subsection. SMP architectures do handle the full context write back to memory during a process context switch. Provisioning is still required between processor subsections 0 and 1 but scaling processor capability will not be accomplished by adding processor subsections.

As a result of the scaling requirement of the dynamic service blade 10 architecture, SMP Linux is the most viable long term RTOS choice for the DSB 10 design. As with any RTOS support for prioritized/preemptive task scheduling, low latency interrupt handling, task signaling and message queuing, semaphores and memory management services is required.

The BSP will be heavily leveraged from a MPC7447A/Discovery III evaluation platform. In addition to the standard processor core BSP support, PSEv2 FPGA device drivers will be ported from a VxWorks implementation to a Linux implementation on the DSB 10. One other major difference between the PSEv2 and the DSB 10 FPGA driver support is the added DMA support required on the DSB 10. Packet queues are maintained within each processor subsection's memory and DMA engines within the packet switch FPGA and the Disco III controller are used to transfer packet data.

The FPGA device drivers and the management of the data structures existing in memory attached to the FPGA's is performed by processor subsection 0. In addition, all system chassis management functions will be performed by processor subsection 0. This includes all state machine interactions with the master RCP to control initialization, image updates and shutdown of the DSB 10.

A DSB 10 inter processor messaging scheme is to relay data structure update requests and acknowledgments between processor subsections. A higher level, per service API will be used by processes for services that require the hardware data structure updates. The API calls use an abstraction layer when making RTOS calls to allow the code to be more easily ported to alternate RTOS.

System level functions such as logging and statistics accumulation will be performed by each of the processor subsections individually. Each processor subsection maintains an independent communication channel with the RCP and all messaging between them is transparent to any hardware or lower level transport software on the card.

Load balancing between processor subsections is performed at provisioning time. A load balancing manager running on the RCP card 28 maintains an application service table. Included in the table are services running on processor subsections for all DSBs 10 in a chassis on a per VPN basis. The data structures contained with in the table are the application executing, a weight assigned to the application, the bandwidth assigned to application and processor/memory resources assigned to the resource. At provisioning time for new service on a VPN, the load balancing manager will input the associated parameters for the service and determine the assigned DSB 10 and processor subsection for the service. Each DSB 10 card contains a load balancing client used to enable and disable services on a per VPN basis.

Hardware device busses contained in processor subsections are multiplexed together to provide access to a common flash memory. Upon power up or hardware reset, processor subsection 0 is first released from reset. Upon completion of the boot process, which includes TIS selection, RTOS bring up, FPGA and device driver loads and IPCM, process subsection 1 is removed from reset and allowed to boot. After a successful boot, service configuration data is loaded into the processor subsystems and the card is enabled to service packets.

Communication between processors within the dynamic service blade 10 is done via IPCM protocol. The DSB 10 uses IPCM to transfer data directly between each processor subsection on the card and the RCP. No direct communication occurs between the DSB 10 and a PSE or other DSBs 10. Any communication between the PSE's and DSB's 10 is done via the RCP. IPCM requires a PCI messaging window to be setup within a processor's memory space into which other processors can write commands and data. A 16MB window is allocated in a single processor's address space for each processor it runs an IPCM protocol with.

An extension of IPCM is used to transfer information between a processor subsection and an RCP. The same messaging protocol is used but with DSB 10 unique processor identifiers embedded in the messages. The same size window of 16MB is used for queuing of on card messages and the data transfer is carried over the DSB's 10 control PCI bus.

In general, messaging between the RCP and DSB 10 processor subsystem 0 are application messages, forwarding messages and chassis management messages. Messaging between RCP and processor subsystem 1 are application and forwarding messages and messages between processor subsystem 0 and 1 are data structure update messages or hardware processor status messages.

The DSB 10 processor subsections are responsible for forwarding the packets they service as the card does not contain a network processor based forwarding engine. A FIB is maintained in each processors main memory and includes both a trie lookup table and next hop record table. After a service is performed on a packet, the 16 byte encapsulation header is overwritten with a new next hop record. The new encapsulation header contains the standard ingress, egress and L2 flow ids along with a switch port map. The packet is then enqueued to switch port queue and sent to an egress PSE.

The application software executing on a DSB 10 processor subsection can be a 3^{rd} party software application or a proprietary application. Listed below are typical software applications that can execute on the DSB 10.
- Firewalling
- NAT/PAT
- Content Filtering
- Deep Packet Inspection
- IPSEC
- IPV4/IPV6 Gateway
- VOIP Signaling Gateways
- Application Proxy Gateways
- IPSEC Tunneling
- L2/L3 Tunneling Services
- Intrusion Detection
- Lawful Intercept

To support the services provide by the DSB 10, software service support is required on the RCP and the PSE cards 24. The RCP support is centered around provisioning services based on processor resources in the system, providing the maintenance support (stats, logs, ect) for those services and distributing FIB information to PSE's to support the forwarding of packet flows to an assigned DSB 10 processor. Any dynamic load balancing implemented in the future would be done by the RCP, enabled by reception of control packets via the slow path.

The PSE support is centered around the classification operation performed to determine the DSB 10 and processor subsection to which a packet flow is forwarded. All parsing and classification lookups are performed in by the ingress PSE network processor. Typically the VRID/VI and the destination transport addresses will play a dominant role in the classification process. Flow ID fields in the encapsulation header prepended to a packet will be used as a handle by the DSB 10 card. Other than the classification operation support, no addition software support is required in the ingress or egress PSE code.

The following subsections define the data flows within the dynamic service blade 10 platform 14 for packets that require DSB 10 services. Packets requiring DSB 10 services flow from an ingress PSE card that performs classification, to a DSB 10 card for servicing, and then to an egress PSE for transmission to an output link.

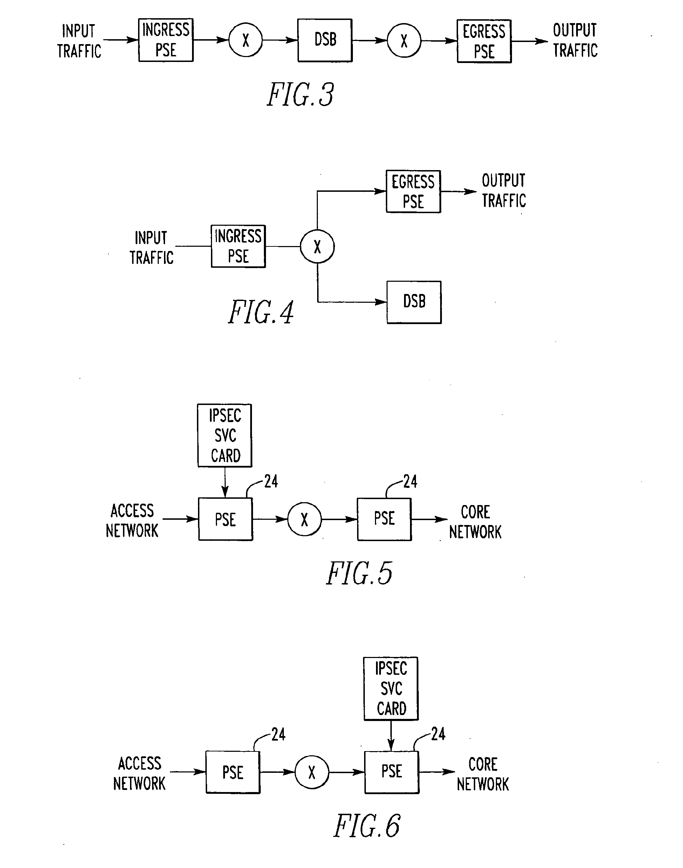

Figures 3 and 4 show the data flow through the dynamic service blade 10 system for both inline and mirroring type services.

Packets received at the ingress PSE card are classified within the PSE fast path and if the classification is successful the packet is assigned a next hop record. The next hop record contains a set of flow identifiers used by downstream engines along with internal switch routing maps. Packets not classified within the fast path are sent to the PSE slow path for next hop record generation. Next hop record fields are inserted into an encapsulation header that is sent along with the packet to the DSB 10 card.

An ingress flow identifier, located in the next hop record, selects a dual token bucket resource used by an ingress side rate policing engine. Based on the results of policing operation, a packet can be forwarded, remarked or dropped. Statistics are maintained on a packet and byte basis for all rate policing results. An ingress flow assignment is made based on the source of packet.

A 17 bit SVC flow identifier, located in the next hop record, is used by the DSB 10 card to select the appropriate queue that a packet is enqueued to. The model used for DSB 10 flow assignment is to assign a single flow per service type per VPN. The SVC flow identifier replaces the egress flow id used for a standard ingress to egress PSE transfer.

A port map also located in the next hop record is used by the switch fabric as a self routing label to route packet data to the appropriate switch fabric output port. Two forms of port maps are supported. A unicast port map is used when a packet is sent only to the DSB 10 card. After DSB 10 servicing, the packet is then sent to the egress PSE card. This type of port map is used for inline type of service where the packet flow is from ingress PSE to DSB 10 to egress PSE. A multicast port map is used for services that use mirroring techniques such as intrusion detection or CALEA. The packet flow in this case originates at an ingress PSE and is multicast to both a DSB 10 card and an egress PSE.

Packets received at the DSB 10 card from the switch fabric are prepended with an encapsulation header that is used to process the packet. The SVC flow id field in the interbox header is the only field used by hardware on the DSB 10 card to process the packet. The queuing engine on the DSB 10 is the same engine used on the PSE and DSB 10 flow id is treated identical to an egress flow id. Transmit bandwidth into a processor subsystem is programmable on a per flow basis, allowing services for VPN to be assigned to unique packet flows that are allocated specified bandwidths. Thirty two WFQ's are assigned to each processor subsystem with each flow assigned to a WFQ and having its own RED level thresholds.

The Packet Switching FPGA on the DSB 10 contains DMA engine logic used to write packet data into packet memory of a processor subsystem. A separate DMA engine is assigned to each processor subsection on the card. Scatter gather DMA operations using a ring buffer mechanism to access free memory pages are used to transfer the data in to a processor's main memory. A 4 byte offset is used when writing packets into memory to allow the processor to create a standard 16 byte interbox header for subsection transmission back to the switch fabric through a rate policer. Pointer control to support 32 ring buffers per processor subsystem exists in the Packet Switch FPGA.

The processor subsystems maintain 32 small FIFO based queues in main memory. The FIFO's are small in size to allow the FSU queuing system to be main determinant of packet queuing latency. Once a packet reaches the head of a FIFO, a processor starts its packet servicing by accessing the 12 byte interbox header encapsulated on the packet. The SVC flow id and the destination switch port map field are used as a handle to index into service identifier table and a VPN identifier table located in processor memory.

With the packet data in main memory and the VPN configuration data determined, the processor can perform the required service operation on a packet. In addition to performing the configured service for the flow on the packet, the processor also performs a forwarding operation. The 16 byte interbox header that is prepended to a packet on the ingress PSE is over written with a new interbox header obtained from a next hop record stored in processor memory. The processor performs a trie based lookup using the VRID and IP destination address to select a next hop record.

After performing the service required and the forwarding operation, the packet is transferred via a DMA engine in the Discovery III memory controller into holding buffer within the packet switching FPGA and from there into the TSU's cut through buffering system. A rate policing operation is optionally performed in hardware and after arbitration, the packet is resent into the switch fabric.

Packets received at the egress PSE do not contain any history of whether a packet was sent to the DSB 10 card or whether the packet was forwarded directly from an ingress PSE. Egress flows are allocated link bandwidth and are enqueued to WFQ structures with programmable RED thresholds. Packets are stored in an egress buffer system upon reception from the switch fabric.

Packets stored in the egress buffer system are transferred on demand to physical interface card 32 for transmission to an output link via FSU segmentation engines. The L2 flow id is used by the physical interface card 32 to perform packet header encapsulations and modifications.

Service cards are mezzanine cards that can be populated on PSE or DSB 10 cards. Architectures of three general types of cards are defined for use in the dynamic service blade 10 system: inline hardware based, inline software based and coprocessor based. Five interface types are defined for use in a dynamic service blade 10 system. The are: PMC, PrPMC, PT5MC, XMC and Aurora. A service card typically implements only a single function.

An inline hardware based service card contains hardware or microcode engines that process packet flows. A PCI bus is used to transfer control plane information into the card. All hardware on the inline hardware based service card resides within the address space of the PSE or DSB 10 card it resides on.

The data plane is supported through full duplex 3 Gb/s Aurora data links (in the case of an Aurora based service card) or 1000 BaseT Ethernet links (in the case of a PT5MC based service card). For PSE based service card configurations, a service card logically resides between a PHY card 32 and PSE cards 24 and can service packets on both the ingress and egress paths. For DSB 10 based service card configurations, a service card logically resides between the processors and the fastpath logic and can service packets being sent into and out of the processor subsections.

An inline software based service card contains an on board processor and memory used to perform operations on packets. All hardware on the inline software based service card resides in the address space of the service card processor.

Both control and data are transferred into and out of the card over either a PCI-X bus (PMC or PrPMC card service type) or a PCI-Express bus (XMC service card type) via DMA engines, or via GigE links on a PT5MC or PrPMC type service card. The data flow of packets on a PSE or DSB 10 that has a populated inline processor based service card is identical to the hardware based service card described above.

A coprocessor based service card contains hardware and software used to off load a DSB 10 processor subsystem when processing a packet. This type of service card is not used on a PSE. The service card may be a hardware only type card or may contain a processor that executes firmware or software. From the viewpoint of the processor subsystems on the DSB 10, the coprocessor based service card is accessible via a PCI bridging architecture. Either PCI-X (PMC/PrPMC card types) or PCI-Express bus (XMC) interfaces can be used to implement the PCI bridging architecture.

DMA capability into a processor subsystem's main memory is supported. Typically a processor subsystem will write a command into a coprocessor based service card containing a command type and memory addresses. The service card will read packet data from processor memory, operate on the packet data and write new or modified packet data back into a processor's memory.

The service card form factor is based on the VITA 42.3 XMC standard. This enables the use of PCI-Express, PMC and PT5MC mezzanine cards. In addition, a custom mezzanine card type supporting 3.125 Gb/s is defined. The control and data interfaces for each service card form factor type are listed below.

| **Service Card Interface Type** | **Control Plane Interface** | **Data Plane Interface** |
|---|---|---|
| XMC | PCI-Express | PCI-Express |
| PMC | 64 bit PCI-X | 64 bit PCI-X |
| PrPMC | 64 bit PCI-X | 2x Gigabit Ethernet Links |
| PT5MC | 32 bit PCI | 2x Gigabit Ethernet Links |
| Aurora | 32 bit PCI | 2x 3.125 Gb/s Aurora Links |

Dataflow for service card residing on a PSE card starts with a classification operation being performed by an ingress PSE. Following the classification, the packet is prepended with a 17 bit flow identifier and forwarded on to the service card for ingress servicing. All hardware and software needed to fully service a packet are contained on the service card. After ingress processing, the packet is the forwarded back to the NPU or directly onto the TSU for traffic management. A descriptor table within the service is used to determine an ingress packet's destination and its required encapsulation headers.

On the egress path, flows are queued according to bandwidth schedulable channels on which they are provisioned. All packets provision for a particular channel are forward on to a service cards where a classification is made on a per flow basis to determine if packet will be serviced or forwarded directly to a network. Packets that are serviced are queued for transmission to a network when the servicing is complete.

Online hardware based service cards, ingress packet data is transferred into the card and temporarily buffered in FIFOs before being transferred into a pipelined hardware engine. Data is then typically processed and transferred in a cut through fashion out of the service card. The egress side data flow occurs in the same manner although a data is first transferred into a context handling engine on the service card to more easily support a large number of egress FSU channels. On inline software based service cards, ingress data is transferred into the memory space of the service card processor. This is typically a store and forward operation. After processing, the packet data is transferred off the service card via a DMA write to a FIFO based addressable target FPGA on the PSE.

Dataflow for a service cards residing on the DSB 10 card is similar to the PSE with the exception being that SVC FLOW ID in the interbox header is used as a descriptor handle by the service card. A typical data flow would see a packet originating from the switch interface of the DSB 10, transiting the FSU buffering system and being forwarded on to a service card. After servicing the packet would be sent to a selected processor subsystem based on the SVC FLOW ID. After packet processing by a DSB 10 processor subsection, the packet is then forwarded onto the service card for further processing and the onto the TSU traffic manager/segmentation engine before being returned to the switch fabric.

For coprocessor based service cards residing on the DSB 10, the packet data flow occurs as defined in the DSB 10 coprocessor section of this document. Once in a processor subsystem's memory, packet data is read and processed on the service card and is then written back to processor memory. After being written back to memory, a forwarding operation is performed and the packet is queued to the switch fabric.

The Dynamic Hardware Services Blade (DHS) resides in the PHY card 32 slot associated with a DSB 10 card. Its main function is to provide a hardware based off load to the DSB 10 card for both packet services and forwarding operations. A network processor is contained on the card to provide the forwarding function. Hardware specific to the services performed is also contained on the card. Different variants of the card will exist to support different services. The initial DHS card will be a card that contains an NP and is a carrier card for up to 3 service cards making it a multifunction card. Supported service card configurations on this multifunction card will be determined.

A SPI-3 type bus will be used to transfer data into and out of the DHS card. An interface FPGA logic core will be used on all DHS designs to interface to the DSB 10. A second common logic core will be used to interface to the NP on the card. All other logic on a DHS card is specific to the card's packet services.

A common software device driver is used to manage the SPI-3 interface FPGA logic. Likewise common PSE driver and microcode images are used to manage the IQ2200 based NP complex on the board. The driver code for both components is executed by process subsection 0 on the DSB 10 board.

Packets received by the DSB 10 card are transferred by the Packet Switch FPGA to the DHS over the SPI-3 bus. Full multi channel support is provided over the bus and 16 channels are dedicated to the DHS. The egress flow id in the next hop record prepended to the packet is used to determine the channel of a packet flow and thus whether the packet should be sent to the DHS card.

Once a packet is transferred to the DHS, the required service operation is performed on the packet and it sent to the NP for forwarding. After the forwarding operation is completed, the packet is queued for transmission into the switch fabric.

In addition to supporting a hardware packet based data flow, variants of the DHS can also be used to support application data base storage through multiple 100MB on board 2.5" drives or NAS interface logic.

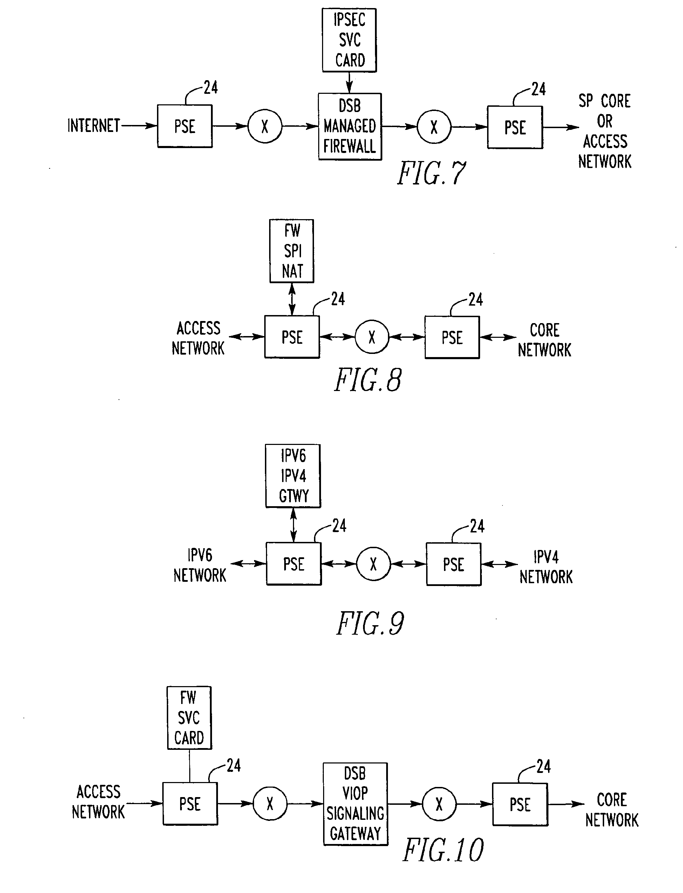

Figures 5-10 show deployment examples for a few applications using DSB 10 and service cards. It is only a subset of possible examples. In cases where both DSB 10 and service card solutions exist for a service, the most cost effective configuration (centralized with DSB 10 or distributed with service cards) is determined by service provider provisioning and traffic loads.

To support market window requirements, the implementation of the DSB 10 will be based in the fast path chipset. Gigabit Ethernet links are used as the packet transport between the fast path chipset and the 7448 based processor subsections. Packet formats and encapsulation headers at the interface from the fastpath chipsets to the processor subsections are the same allowing for a single software version on the packet handling code. The table below describes the DSB 10 features supported in both a version 1 and version 2 fastpath chipset DSB 10 implementation.

| **Hardware** | **DSBv1** | **DSBv2** |
|---|---|---|
| Processor | 7448, 1.5 Ghz | 7448, 1.5 Ghz |
| Memory | 2/4 GB per processor | 2/4 GB per processor |
| IDE Flash Storage | 2 CF Type 1 Sites, 16GB max. | 2 CF Type 1 Sites, 2 CF Type1 or Type 2 Sites, 32 GB max. |
| Fast Path Chipset | Version 1 | Version 2 |
| Front Panel Ethernet | 1 10/100/1000 per processor | 1 10/100/1000 per processor |
| Front Panel Serial Port | 1 per processor | 1 per processor |
| Packet Transport | Gigabit Ethernet | PCI-X |
| Ingress Flows | 32K | 128K |
| Egress Flows | 32K | 128K |
| LLQ/WFQ Channels | 2 | 32 |
| Max Data Throughput | 2.5 Gb/s | 4.0 Gb/s |
| Service Card | Not supported | PrPMC, PT5MC, Aurora, XMC |
| Dynamic Hardware Blade | Not supported | Data/Control DHS Supported |

The Dynamic Service Blade (DSB) 10 is a platform 14 that allows 3^{rd} party software development teams to migrate and implement a wide variety of service applications to the edge router 12 product. The DSB 10 card has the ability to redirect or mirror packet flows to the DSB 10 card for additional service specific processing, without the complexity of cables and external equipment. This document identifies Application Program Interfaces (APIs) available to developers for this purpose.

The Linux Operating System runs on the DSB 10 card, and was chosen based on the number of existing network applications, and the licensing and cost structure. The list of available applications is large and growing. This includes:
- NAT/Firewall applications.
- Packet capture/dump applications.
- Network flow applications.

As is the case with any embedded system, OS stability, performance and footprint size are important factors for the DSB 10 card. For these reasons, the DSB 10 OS is based on the 2.6.x Linux kernel. The 2.6.x kernel is a fully functional OS with real-time features and full multi-processing and threading capabilities. This version of the kernel has been successfully ported to a number of embedded systems, and includes support for numerous IP protocols, including:
- NAT/firewall.
- FTP, TFTP.
- telnet.
- Bootp.

The tool chain and root file system is based on the Buildroot software package, and includes:
- GCC cross compiler, assembler and linker.
- Standard C library (uClibc) designed specifically for embedded systems. The uClibc library provides most of the features of the standard GNU C library, but at a fraction of the code size.
- Most standard UNIX utilities (BusyBox). Like the uClibc package, the BusyBox UNIX utility package is designed to provide the standard UNIX utilities with a minimal footprint.
- Packet capture library, and tcp_dump facilities.

The DSB 10 runs a standard Linux OS, which provides a number of security features. As is the case with any server, security is ultimately the responsibility of the system administrator.

In many cases, the same system administrator will manage the system and the DSB 10 card, but this might not always be the case. Because of this, the system administrator will have the ability to enable/disable a DSB 10 card, and will also have the ability to restrict the DSB 10 features to specific Virtual Router 12 contexts.

Virtual Routing (VR) is a key feature of the system.

The socket API is used to send and receive packets, and the bind command can be used to restrict the socket to a specific interface. By binding to specific interfaces it will be possible to implement VR specific applications on the DSB 10 card.

The DSB 10 card includes two independent processor complexes, and each individual processor can be configured for a different default VR context. The following defines the commands available for managing the default VR context.

### Set VR Context API (mr_set_vr)

This API is used to set the default Virtual Router (VR) 12 context for a specific DSB 10 processor. The DSB 10 card includes two independent processor complexes, and each individual processor can be configured for a different default VR. The kernel IP stack, which currently only supports a single routing instance, will be restricted to this VR. This API is restricted to applications/users with super user or root privilege permissions.

### Name

mr_set_vr -- Set the default Virtual Router context.

### Description

Sets the default Virtual Router 12 context for the specified processor. This is the router 12 context that will be assumed for all standard port based socket calls. If there are any open sockets this request will be rejected.

### Synopsis

int mr_set_vr (int processor_id, int vr_context);

### Arguments

processor_id
The DSB 10 card includes two independent processors and the valid range for this argument is 0-1.

vr_context
This argument identifies the Virtual Router 12 context that will be used by the Linux IP stack for the selected processor. The valid range for this argument is 2-8000. Note: VR context 1 is reserved by the system and will not be accessible by the DSB 10 card.

### Return Values

Returns 0 if successful, otherwise returns a negative value whose definition is defined in the *mr_api.h* file.

### Command Line

ip vrf add <vr_context> cpu <processor_id>
ip vrf add 100 cpu 0

### Get VR Context API (mr_get_vr)

This API is used to get the default Virtual Route (VR) context for a specific DSB 10 processor.

### Name

mr_get_vr -- Gets the default Virtual Router context

### Description

This command is used to get the default Virtual Router context for the specified processor.

### Synopsis

int mr_get_vr (int processor_id);

### Arguments

processor_id
The DSB 10 card includes two independent processors and the valid range for this argument is 0-1.

### Return Values

Assuming the *processor id* argument is valid, this routine returns a non-negative integer, which represents the default Virtual Router context for the specified processor. Otherwise a negative value, whose definition is defined in the *mr_api.h* file, is returned.

### Command Line

ip vrf show

### Get Processor Id (mr_get_processor_id)

The DSB 10 card supports multiple independent processor complexes, and this API is available to application code to determine which processor the application is running on.

### Name

mr_get_processor_id -- Get and return the process number.

### Description

Returns the processor identifier. The DSB 10 card includes multiple processors, and some of the APIs require the processor identifier as one of its arguments.

### Synopsis

int mr_get_processor_id ();

### Arguments

None.

### Return Values

Returns the processor identifier, which will range from 1-2.

Network devices drivers will be configured and initialized for the physical ports on the DSB 10 card as part of the normal boot-up initialization. Linux imposes a naming convention for standard network devices, which the DSB 10 will follow. For example, the DSB 10 card includes two physical gigabit Ethernet interfaces, which are named "eth0" and "eth1".

In addition to these physical network devices, the DSB 10 applications also need access to selected system interfaces. Given the system can support 100's of Virtual Router instances, and 1000's of interfaces, there is no practical way to create network devices for all possible interfaces. Instead, up to a predetermined number of virtual network devices will be defined for this purpose. The user will bind these virtual network devices to specific interfaces using a new *mrconfig* tool, which is described later in this document, or programmatically using the API's also defined in this document. The virtual network device naming convention is "mrv0", "mrv1", ...

When a virtual network device is bound to a specific interface, the DSB 10 kernel communicates to the system requesting that the packet flow associated with the interface be redirected to the DSB 10 using one of the following flow modes:
- Mirrored. With this flow mode, a mirrored image of all IP packets received or destined to the specified interface will be sent to the DSB 10 card. The system would still forward the packets to their destination in parallel to sending a copy to the DSB 10, and because of this the DSB 10 will not be allowed to transmit packets over a *DSB 10 virtual network* device configured in this mode. Applications that need to capture or monitor packets would be well suited to use this mode.
- Bump in the wire. With this flow mode, IP packets received on or destined to the specified interface will be forwarded to the DSB 10 card for additional processing. Under the covers, the DSB 10 will receive routing updates from the system, and when the DSB 10 transmits a packet over this type of interface a route lookup is done to determine which egress interface to forward the packet to. Firewall applications would be well suited to use this mode.
- Bump in the wire with checks and filters. This flow mode is similar to the above mode, except on ingress the normal IP route lookup and filters, including ACL filters, is still done. If a packet is received which the system does not have a valid route for the packet will be discarded. Likewise if the packet fails any of the filter checks the packet will also be discarded.
- Local. With this flow mode, all IP packets received on the specified interface will be forwarded to the DSB 10 card, and any packets transmitted by the DSB 10 card over this interface will be transmitted out the interface. In a NAT application, the local or private network interfaces would be well suited to use this mode.

It is important to note, the system will handle all of the layer-2 protocols, and only IP packets will be forwarded to the DSB 10 card. The *DSB 10 virtual network device* will also mirror the link state of the specified interface. If the interface administration or operational state is down then the associated *DSB 10 virtual network device* interface will also be down.

The following API can be used to bind DSB 10 virtual network devices to specific interfaces.

### Name

mr_vnet_bind -- Binds DSB virtual network device to an interface.

### Description

Binds DSB 10 virtual network device to a specific interface. Assuming the arguments pass a validity check, the DSB 10 kernel will generate a request to the system requesting that the packet flow associated with the specified interface be either mirrored or redirected to this DSB 10 card. The may reject the request for a number of reasons, including:
- The system administrator has not enabled the system to accept such requests from this DSB 10 card.
- The requested logical device does not exists.
- The if_type is not supported on the requested logical device.

### Synopsis

#include <mr_api.h>

int mr_vnet_bind(char *vnet_name, int vrf_id, int slot_id, int port_id, int if_type, int if_channel, unsigned int ip_address, unsigned int ip_mask, int packet_flow_mode);

### Arguments

A DSB 10 *virtual network device* and be created based layer-2 link information, layer-3 IP information or a combination of both. A "0" value can be used for any argument that the caller deems unnecessary. For example, assume the device is being created solely on IP information then all of the layer-2 specific arguments should all be "0" values.

vnet_name
Identifies the DSB 10 virtual network device that will be bound to the interface. For example, valid device names would include: "mrv0", "mrv1", ...

vrf_id
Virtual Router context identifier (1-N).

slot_id
Slot number associated with the interface (1-16).

port_id
Physical port associated with this interface (1-N).

if_type
Interface type, as specified by the IANA organization, of the interface. An error will be returned if the if_type specified is not supported on the specified virtual interface.

if_channel
Interface channel identifier of the interface.
An error will be returned if the if_channel specified is not supported on the specified port.
This will vary based on the if_type, as follows:

| if_type | if_channel |
|---|---|
| ds1(18) | DS1 link (1-N). |
| ds3(30) | DS3 link (1-N). |
| aal5(49) | VCI.VPI (1-N). |
| ds0Bundle(82) | DS0 bundle on DS1 (1-28). |
| PppMultilinkBundle(108) gigabitEthernet(117) | Raw Ethernet (0). |
| 13ipvlan(136) | VLAN tag id (1-4095). |

ip_address
The IPv4 address of the interface.

ip_mask
The IPv4 mask of the interface.

packet_flow_mode
The system can deliver IP packet flows using the following modes:
Mirrored mode (1). In this mode a replica of the packet is delivered to the DSB card, in parallel to the forwarding. Applications that need to capture/monitor traffic without making any forwarding decisions would use this mode. A network device configured in this mode is not capable of transmitting packets, and any attempts will result in an error.
Bump in the wire mode (2). In this mode, IP packets received on or destined to the specified interface will be forwarded to the DSB 10 card for additional processing. The DSB 10 will receive routing updates from the system, and under the covers when the DSB 10 transmits a packet over this type of interface a route lookup is done to determine which egress interface to forward the packet to.
Bump in the wire mode with checking and filters (3). This is similar to the above mode except on ingress the normal IP route lookup and filters, including ACL filters, is still done. If a packet is received which the system does not have a valid route for the packet will be discarded. Likewise, if the packet fails any of the filter checks, the packet will also be discarded.
Local mode (4). In this mode, IP packets received on the specified interface will be forwarded to the DSB 10 card, and any packets transmitted by the DSB 10 card over this interface will be transmitted out the interface.

### Return Values

If successful, a positive integer will be returned representing the Virtual Router context of the specified interface. Otherwise a negative value will be returned whose definition is defined in the *mr_api.h* file. This create request can fail for a number of reasons including:
- If any of the arguments are invalid or out of range.
- The specified slot_id is empty.
- The specified port_id does not exist.
- The specified if_type isn't supported on the specified port_id.

### Command Line

mrconfig <device_name> vrf <vrf_id> slot <slot_id>
port <port_id> inet <ip_address> netmask

### <ip_mask>

mode <packet_flow_mode>

### Socket API

The DSB 10 will support the standard socket APIs, including the Linux packet socket API. The packets that are mirrored/redirected to the DSB 10 includes a non-standard 16-byte header, and because of this a new protocol type (ETH_P_MR8K) was added to the packet socket API. For example, an application that needs to examine IP packets would create a socket as follows:
#include <linux/if_packet.h>
#include <linux/if_ether.h>
int packet_socket = socket(PF_PACKET, SOCK_DGRAM,
htons(ETH_P_MR8K));

By default, all packets of the above specified protocol type (PF_PACKET) would be passed to the above *packet_socket,* unless the socket is bound to a specific interface using the *bind* API. It is a fairly common practice to bind socket to specific interfaces, however when running in a Virtual Routing environment binding sockets to specific interfaces is highly recommended. The kernel code only knows about the default VR context, and in a multiple VR environment with potential overlapping IP address space, unexpected results may occur.

For example, assume a DSB 10 *virtual network device* has been created for an interface on the "mrv3" DSB 10 virtual network device, then binding the above *packet_socket* to this interface could be done as follows:

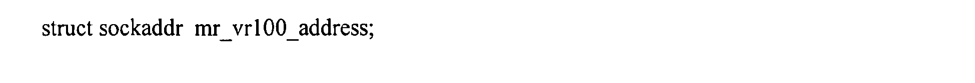

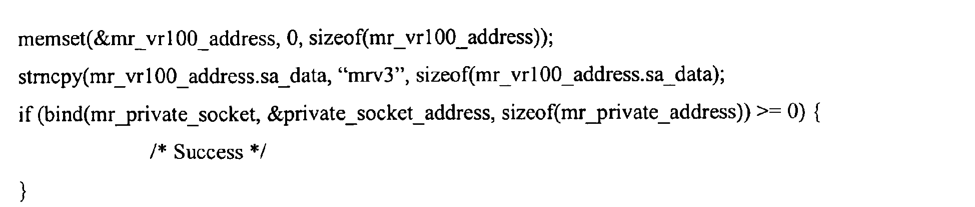

The packet socket API, which is used to send and receive raw packets at the device driver level, is also supported. This standard API supports a *SOCK_DGRAM* and *SOCK_RAW* mode. The SOCK_DGRAM operates on the IP layer, and the SOCK_RAW includes the layer-2 link header. On the DSB 10 card, the SOCK_RAW will include a non-standard 16-byte header, which is used by the hardware to forward the packet. This header information will be of little use to applications and therefore the recommendation is to use the SOCK_DGRAM option.

### Local IP Address Configuration

Some DSB 10 applications may require direct access to remote servers for a variety of reasons. For example, an application may need to FTP the results of a monitoring session to a peer server via an interface that connects the two servers. In such cases, the DSB 10 will need to configure an IP address on the DSB 10, which the system perspective would be consider a locally attached host. Packets received by the system destined to this IP address will be forwarded directly to the DSB 10 card.

The standard *ifconfig* command would be used to configure DSB 10 IP interfaces. For example, assume the following *DSB 10 Virtual Network Device* has been bound to an interface on Virtual Router 100:
"mrv3"
   And assume that a local IP address of 10.1.1.35 needs to be terminated on the DSB 10 card, then the following command invoked from the shell or startup script can be used to configure this address:
ifconfig mrv3 10.1.1.35 netmask 255.255.255.255 up
   On receiving this command, the DSB 10 would then issue a request to the system to add IP address 10.1.1.35 to Virtual Router 100. Assuming the request is accepted, the system would then forward packets destined to this IP address to the DSB 10 card.

### MR8K⇔DSB Proxy CLI Interface

The goal is to minimize the system and DSB 10 card dependencies as much as possible. Most of the MR88⇔DSB communications will be hidden from the DSB 10 application code behind the APIs defined in this document. However, under some circumstances it may be desirable to give the system administrators direct access to the DSB 10 CLI to provide the administrator the ability to configure and manage the DSB 10 applications from the same connection used to manage and monitor the system.

This is accomplished by using Linux pseudo terminals. Up to eight pseudo-terminals will be available on the DSB 10 card for this purpose. From the MR8K-CLI the session is initiated by invoking the following command:
select dsb <slot> <application name>

The <slot> argument specifies the DSB card slot (1-16), and the <application name> specifies the DSB application. Once a session is initiated, all of the MR8K-CLI input will be directed to the specified pseudo-terminal on the DSB card, and any responses from the DSB card over this pseudo-terminal will be output to the MR8K-CLI. It is up to the DSB application to interpret and respond to these commands as it sees fit.

The DSB 10 card will support the standard Linux pseudo-terminal APIs, which includes:
int grantpt (int file_descriptor);
int unlockpt (int file_descriptor);
char *ptsname (int file_descriptor);

However, by default the DSB 10 will not open the master pseudo-terminals until requested to do so by one of the applications, which is done using the following API:
int mr_open_pt (char *application_name);

This API will attempt to open a pseudo-terminal connection with the MR8K-CLI assuming there is an available connection. If successful the API call will return the master file descriptor that the application code can then use to open the slave pseudo-terminal connection, as shown below:
int master_fd;
int slave_fd;

master_fd = mr_open_pt ("xyz");

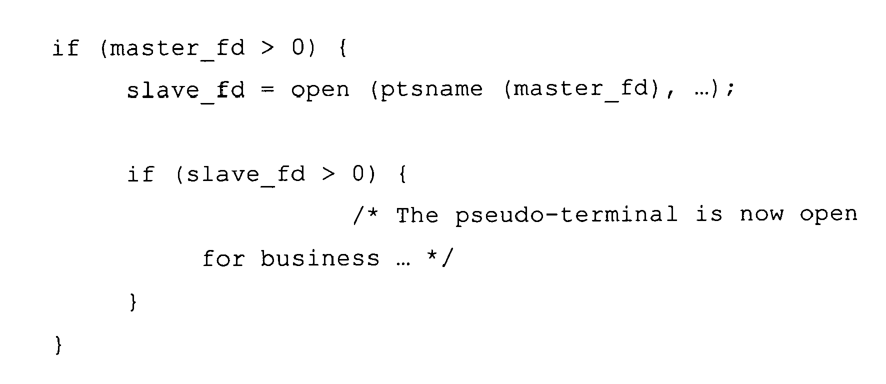

Assuming the DSB 10 card is in slot 10 then the MR8K-CLI command to connect to the "xyz" application is as follows:
select dsb 10 xyz

The command that the MR8K-CLI will interpret is the "exit dsb" command, which will break the MR8K-CLI connection.

### Open Psuedo-Terminal (mr_open_pt)

### Name

mr_open_pt - opens a pseudo-terminal connection with the MR8K-CLI.

### Description

Attempts to establish a master pseudo-terminal connection between the DSB kernel and the MR8K-CLI.

### Synopsis

int mr_open_pt (char *application_name);

### Arguments

application_name
The name of the application associated with this pseudo-terminal. This name must not conflict with the application name for other pseudo-terminal connections, and if it does an error will be returned. The MR8K-CLI will use this name to establish a connection.

### Return Values

If successful, returns a non-negative integer, which represents the file descriptor of the master pseudo-terminal connection. Otherwise a negative value is returned whose definition is defined in the linux/errno.h file.

### Close Psuedo-Terminal (mr_close_pt)

### Description

Attempts to close a master pseudo-terminal connection between the DSB kernel and the MR8K-CLI.

### Synopsis

int mr_close_pt (char *application_name);

### Arguments

application_name
The name of the application associated with this pseudo-terminal.

### Return Values

If successful, returns 0, otherwise a negative value is returned whose definition is defined in the linux/errno.h file.

### NAT Application Example

This section provides coding examples using the APIs and methods defined in this document to implement a Network Address Translation (NAT) application. NAT is an IETF standard (RFC 2631) that defines a method of mapping between private and public IP networks. The DSB Linux kernel supports the netfilter and iptables framework, which can be used to configure NAT on the DSB 10.

Two different NAT examples will be provided. The first example will configure NAT using the built in Linux kernel features, and the second example will demonstrate how an application can be written to implement a VR based NAT application.

### Linux Kernel NAT Example

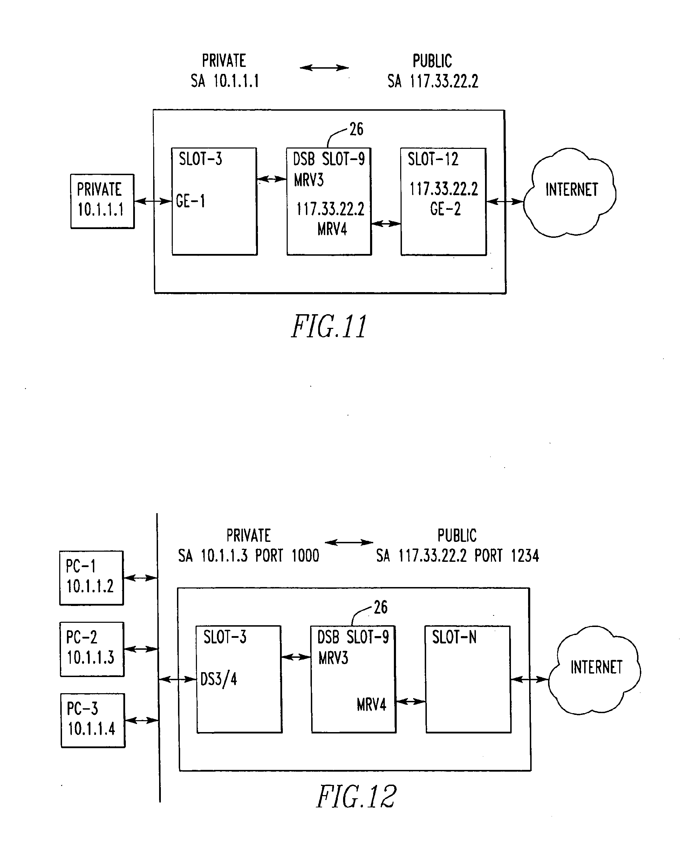

The DSB Linux kernel, will accept all of the standard NAT commands, however for simplicity reason the following example is for a stateless NAT configuration, as diagramed in figure 11.

### Example:

1. Create the default VR context 100 on processor 0:
ip vrf add 100
ip default vrf 100 processor 0
The initial release of the DSB Linux kernel will only support a single router context per DSB 10 processor. All kernel resident interfaces and features supported by the kernel will assume this default VR.
2. Bind the "mrv3" DSB virtual network device to the interface that will be used to access the private NAT network:
mrconfig mrv3 vrf 100 slot 2 port 1 mode
For this example, the private NAT network link will be connected to GIGE port 1 on the card located in slot-2. Below is a brief description of the arguments:

| **Argument** | **Value** | **Description** |
|---|---|---|
| vrf | 100 | VR identifier. |
| slot | 2 | Physical slot number. |
| port | 1 | Physical port number on the above specified port |
| mode | 5 | DSB Local Link Mode. This mode specifies that the requested link be reserved for DSB use only. All received packets will be forwarded to the DSB card unmodified. |
| | | |
| | | If the link is already in use by the then this request will be rejected. |

The command will be rejected and a descriptive error message will be returned if the interface is in use or if any of the slot/port/mode arguments are invalid.
3. Bind the "mrv4" DSB virtual network device to the interface that will be used to access the global NAT network:
mrconfig mrv4 vrf 100 inet 117.33.22.1 netmask ffffff00 mode 2
Below is a brief description of the arguments:

| **Argument** | **Value** | **Description** |
|---|---|---|
| vrf | 100 | Virtual Router id. |
| inet | 117.33.22. 1 | VR 100's pre-configured IP address. |
| netmask | ffffff00 | Pre-configured netmask |
| mode | 2 | Bump in the wire mode. All packets received on or destined to this interface will be forwarded to this DSB card. |

The above command will be rejected and a descriptive error message will be returned if the above VR or IP address information is inconsistent with the system configuration.
Note: this example assumes that the above interface already exists on the system, however if this is not the case then additional arguments can be added allowing the DSB to configure this address, assuming the address and link are not already in use by the system. For example:
mrconfig mrv4 vrf 100 inet 117.33.22.1 netmask
ffffff00 slot 12 port 2 iftype ??? mode 2
4. NAT configuration:
ip route add nat 117.33.22.2 via 10.1.1.1 dev mrv3
ip rule add nat 117.33.22.2 from 192.168.100.17 dev mrv3

It is important to note that the above "dev" option is how the kernel determines which VR the above rule applies to. In the initial release, if the specified VR doesn't match the configured default VR then the request will be rejected and a descriptive error message will be returned. In future releases, the DSB 10 card will support the VRF Linux kernel, which will support multiple VR contexts for kernel resident interfaces.

### NAT Private and Public Interface Configuration

Traditional NAT systems require two or more interfaces, one for the private network connection and another for the public network connection. A DSB 10 based NAT application is no different, except rather than using physical Network Devices for each interface, the DSB 10 application will need to create and use *DSB 10 virtual network device.*

For this example, assume there are two *DSB 10 virtual network device,* an "mrv3" device for the private network connection and an "mrv4" device for the public connection, as shown in figure 12.

The NAT application would receive private packets on "mrv3", and then strip and replace the private IP and port with the public IP and port addresses before transmitting the packet to the public network via "mrv4". Likewise the NAT application would attempt to match up the public IP and port addresses received on "mrv4" to an established private IP and port session. If one is found the public addresses would be replaced with the local addresses, and the NAT application would then forward the packet to the private network via "mrv3".

The following sections provide details on how to configure the *DSB 10 virtual network device* and how to send/receive packets over these network devices.

### Private Network Device

*A DSB 10 virtual network device* is needed to send and receive packets to and from the private network. The system needs to be configured to forward all IP packets received on the specified link to the DSB 10 card. Likewise packets transmitted out the *DSB 10 virtual network device* will need to be transmitted out the link. The system will have no knowledge of the private network, and will not modify or analyze the contents of these packets. The content of the packets is the sole responsibility of the NAT application running on the DSB 10 card. Packets received on the link will be blindly delivered to the DSB 10 application, and packets transmitted over this *DSB 10 network device* will be blindly transmitted out the link by the system.

*A DSB 10 virtual network device* can be bound to a specific interface from the shell or startup script, as follows:
mrconfig mrv3 vrf 100 slot 3 port 4 type 30 mode 4
A *DSB 10 network device* can also be bound programmatically to a specific interface as follows:

| #include <mr_api.h> | | |
|---|---|---|
| int vrf_id | = 100; | /* Not required but it's a good idea to include this information */ |
| int slot_id | = 3; | /* The card slot of the DS3 link */ |
| int port_id | = 4; | /* The physical port on the specified DS3 card */ |
| int if_type | = 30; | /* IANA specified interface type: ds3(30) */ |
| unsigned int ip_address | = 0; | /* Not required in this case and a "0" value indicates that the IP |
| | | * address is not being specified. |
| | | */ |
| unsigned int ip_mask | = 0; | /* Not required in this case and a "0" value indicates that the IP |
| | | * mask is not being specified. |
| | | */ |
| int packet_flow_mode | = 4 | ; /* Local delivery mode. Ingress packets received on the DS3 |
| | | * link are forwarded directly to the DSB card over this device, |
| | | * and Packet transmitted over this device will be transmitted |
| | | * out the DS3 link. |
| | | */ |
| int vr_id = mr_vnet_bind ("mrv3", vrf_id, slot_id, port_id, if_type, if_channel, | | |
| | | ip_address, ip_mask, packet_flow_mode); |

If successful a positive integer will be returned representing the Virtual Router 12 context of the specified interface. If successful a positive integer will be returned representing the Virtual Router 12 context of the specified interface. If the request is rejected a negative value will be returned whose definition is defined in the *mr_api.h* file. A create request can fail for a number of reasons including:
- If any of the arguments are invalid or out of range.
- The specified slot_id is empty.
- The specified port_id does not exist.
- The specified if_type isn't supported on the specified port_id.
- If the process is not privileged. Only privileged processes can bind *DSB virtual network* device interfaces to interfaces.

It is important to note that all layer-2 packets, which in this case might include PPP protocol packets, would be handled by the system, and these packets will not be forwarded to the DSB 10 card. The *DSB 10 virtual network device* would also receive and mirror the link state of the interface.

### Public Network Device

A different *DSB 10 virtual network device* is needed to send and receive packets to and from the public network. The system needs to be configured to forward all IP packets that would normally be routed out the specified link to the DSB 10 card over this *DSB 10 virtual network device.* Under the covers, the DSB 10 kernel code will receive routing updates from the system, and based on this information, packets transmitted over this *DSB 10 virtual network device,* would then be forwarded to the appropriate egress port.

The *mr vnet_bind* API can be used to bind this *DSB 10 virtual network device* from the shell or startup script or programmatically, for example:

| #include <mr_api.h> | | |
|---|---|---|
| int vrf_id | = 100; | /* Not required but it's a good idea to include this information */ |
| int slot_id | = 3; | /* The card slot of the DS3 link */ |
| int port_id | = 4; | /* The physical port on the specified DS3 card */ |
| int if_type | = 30; | /* IANA specified interface type: ds3(30) */ |
| int packet_flow_mode | = 2; | /* Bump in the wire mode. Packets destined to the DS3 link |
| | | * will be forwarded to the DSB card via this device. Packets |
| | | * transmitted over this device will berouted to the appropriate |
| | | * egress port. |
| | | */ |
| unsigned int ip_address | = 0; | /* Not required in this case and a "0" value indicates that the IP |
| | | * address is not being specified. |
| | | */ |
| unsigned int ip_mask | = 0; | /* Not required in this case and a "0" value indicates that the IP |
| | | * mask is not being specified. |
| | | */ |
| int vr_id = mr_create_network_device( "mrv4", vrf_id, slot_id, port_id, if_type, | | |
| | | if_channel, ip_address, ip_mask, packet_flow_mode); |

Note that the only difference between the Network Device used for the private and public network connection is the *packet_flow_mode* argument. If successful a positive integer will be returned representing the Virtual Router 12 context of the specified interface. In this example, the Virtual Router 12 context is 100, and this value would be returned to the caller. Otherwise a negative value will be returned whose definition is defined in the *mr_api.h* file. A create request can fail for a number of reasons including:
- If any of the arguments are invalid or out of range.
- The specified slot_id is empty.
- The specified port_id does not exist.
- The specified if_type isn't supported on the specified port_id.
- If the process is not privileged. Only privileged processes can bind *DSB virtual network* device interfaces to interfaces.

It is important to note that all layer-2 packets, which in this case might include PPP protocol packets, would still be handled by the system, and these packets will not be forwarded to the DSB 10 card. The *DSB 10 virtual network device* would also mirror the link state of the interface.

### IP Address Configuration

A NAT device requires a public IP address, and in this example this public address needs to be configured on the "mrv4" Network Device. This can be done from the shell, startup script or programmatically using the Linux standard *ifconfig* command, as follows:
ifconfig mrv4 117.33.22.2 255.255.255.0 up

The *ifconfig* request can fail for a number of reasons, including:
- If any of the arguments are invalid or out of range.
- The specified Network Device doesn't exit.
- The DS3 link associated with the specified Network Device already has an IP address configured.
- If the process is not privileged. Only privileged processes can bind *DSB 10 virtual network* device interfaces to interfaces.

### Sending/Receiving Packets

Two socket interfaces will be created for this example. The 1^{st} socket will be used for the private network connection, which will use the "mrv3" Network Device, and the 2^{nd} will be used for the public network connection, which will use the "mrv4" Network Device. The example code below could be used to create the socket interface to the private network is as follows:

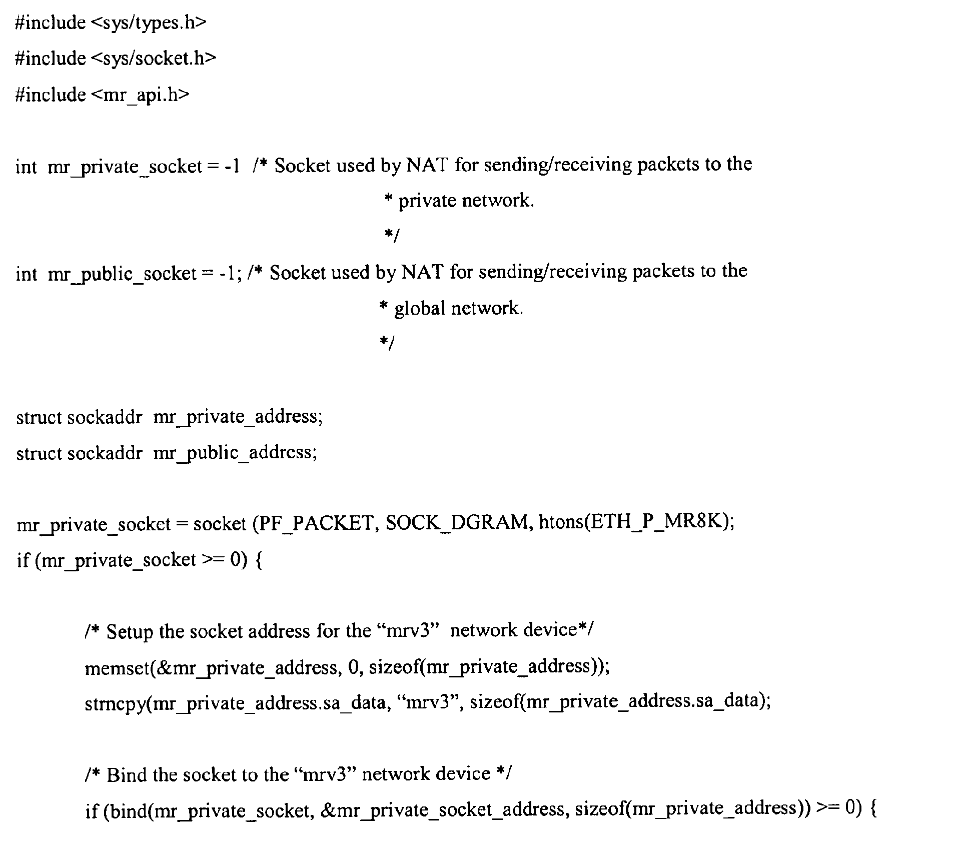

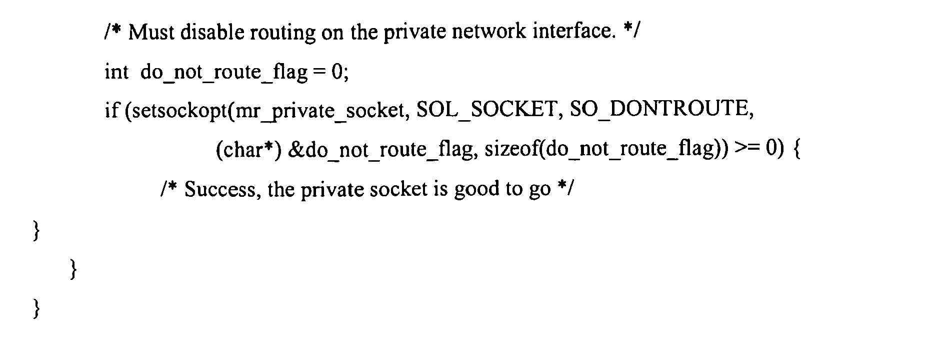

And the example code below could be used to create the socket interface to the private network is as follows:

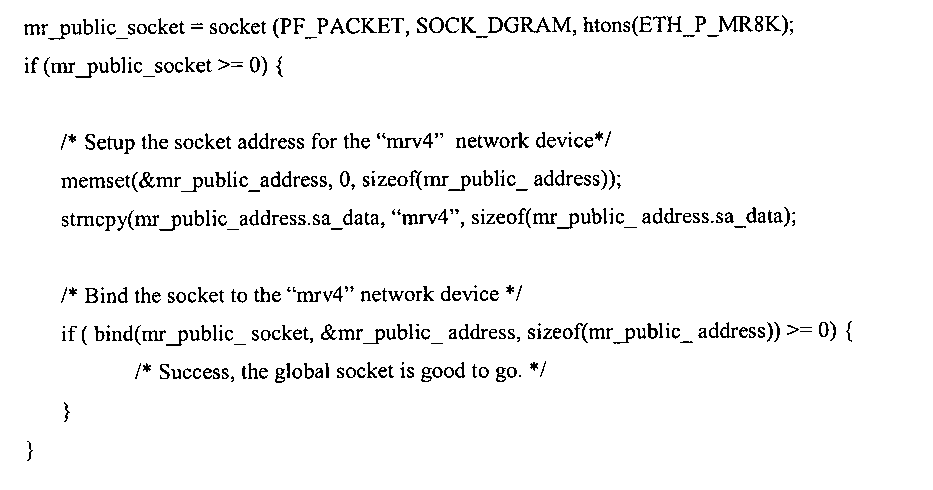

The standard Linux packet socket API sends and receives raw IP packets at the network device driver level, and all of the standard packet socket API calls are supported. To continue this example, assume the NAT application implements a *nat _convert_private_to_global* routine, which magically converts and maps private network packets to a global network packets. Then given the above defined *mr_private_socket, mr_private_address, mr_global_socket,* and *mr_global_address* structures, moving a packet from the private network to the global network could be done as follows: 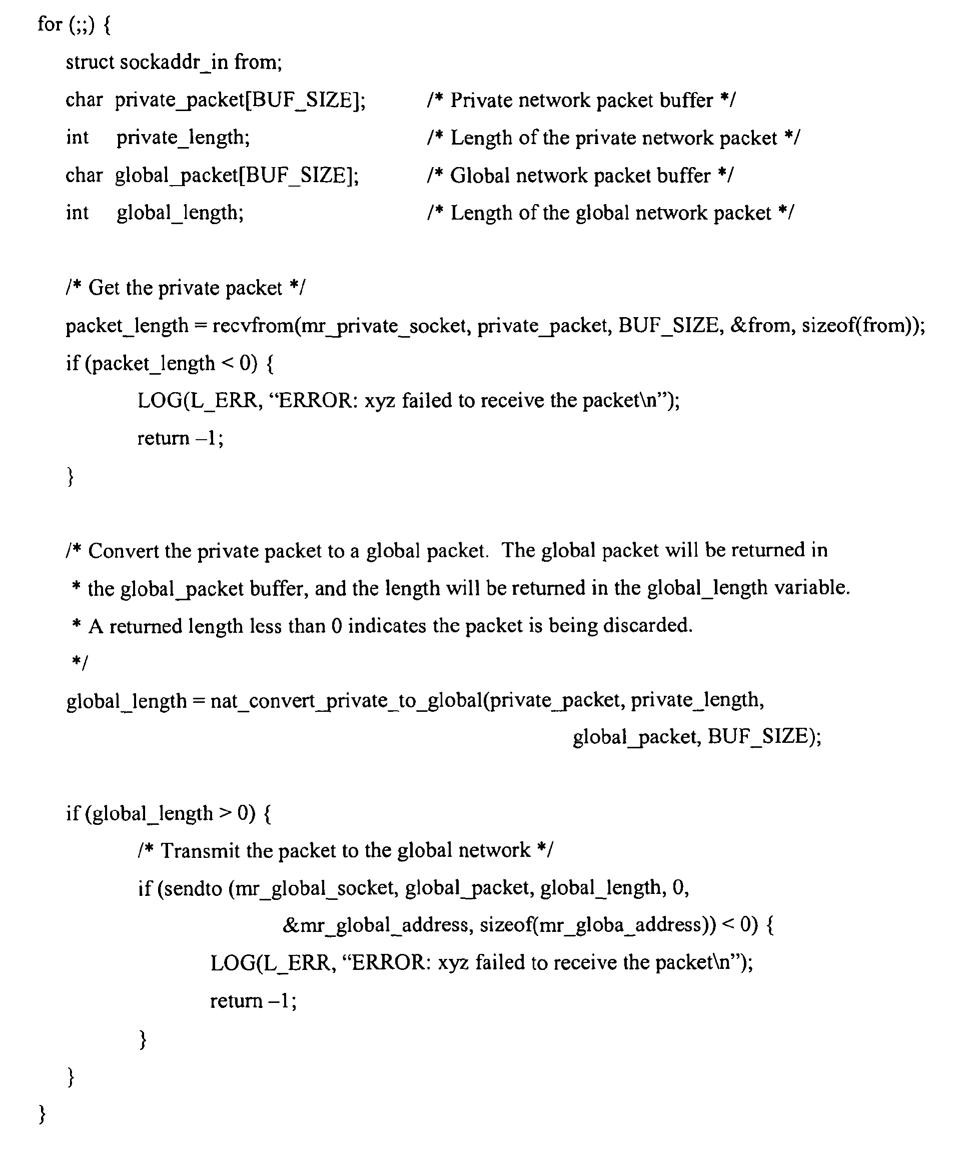 A nearly identical loop could be written to translate packets received on the global network to the private network.

### Introduction

As shown in figure 13, the dynamic service blade 10's architecture is now described. It defines the major components, data flows, and data structures as well as platform configurations used to support typical service applications.

### Glossary

- API: Application Program Interface
- CLI: Command Line Interface
- DLL: Dynamically Linked Libraries
- DSB: Dynamic Services Blade
- GPL: GNU Public License (Linux)
- IPC: Inter-Processor Communications
- MR8K-CLI: MR8K's standard Command Line Interface
- NAT: Network Address Translation
- PSE: Packet Services Engine
- SMP: Symmetric Multi-Processing
- RCP: Route Control Processor

Although the invention has been described in detail in the foregoing embodiments for the purpose of illustration, it is to be understood that such detail is solely for that purpose and that variations can be made therein by those skilled in the art without departing from the spirit and scope of the invention except as it may be described by the following claims.

## Claims

1. A dynamic services blade which is embedded in a data path comprising:
a router;
a general computer platform combined with the router to host the services; and
a container in which the router and the computer platform are disposed.

2. A blade as described in Claim 1 wherein the router include switch fabrics.

3. A blade as described in Claim 2 wherein the router includes ingress ports in communication with the switch fabrics and egress ports in communication with the switch fabrics for packet transfer with external networks.

4. A blade as described in Claim 3 wherein the platform is configured to execute third-party software.

5. A blade as described in Claim 4 wherein the container has a plurality of slots, the router includes a plurality of route control processor cards that fit into the slots, and switch fabric cards that fit into the slots which have the switch fabrics, and the platform includes service engine cards.

6. A blade as described in Claim 5 wherein the service engine cards are configured to provide a distributed architecture.

7. A blade as described in Claim 6 wherein the rate control processor cards are configured to execute routing and container management.

8. A blade as described in Claim 7 wherein the service engine cards include redundant switch fabric cards configured to support automatic failover.

9. A blade as described in Claim 8 wherein the service engine cards are configured to provide classification, forwarding, queuing and buffering operations to switch packets from ingress ports to egress ports.

10. A blade as described in Claim 9 wherein the ingress ports and egress ports are found on interface cards disposed in the slots.

11. A blade as described in Claim 10 wherein the platform is configured to provide a bump in the wire topology that allows packets to pass through with a data transform or filter function.

12. A blade as described in Claim 10 wherein the platform is configured as a gateway translator.

13. A blade as described in Claim 10 wherein the platform is configured as the termination point for the packets.

14. A method for hosting services comprising the steps of:
applying network functions to control plane traffic with a dynamic services blade which is embedded in a data path; and
applying network functions to data plane traffic with the dynamic services blade.

15. A method as described in Claim 14 including the step of supporting embedded intercept and media over IP applications as part of a router of the dynamic services blade.
